# EUROPÄISCHE PATENTSCHRIFT

(11) **EP 3 560 283 B1**
(45) Veröffentlichungstag und Bekanntmachung des Hinweises auf die Patenterteilung: **24.05.2023**
(21) Anmeldenummer: 17829284.3
(22) Anmeldetag: 12.12.2017
(51) Int. Cl.: H05B 6/12

(54) **GARGERÄTEVORRICHTUNG**
COOKING APPLIANCE
DISPOSITIF POUR APPAREIL DE CUISSON

(30) Priorität: 23.12.2016 ES 201631676
(43) Veröffentlichungstag der Anmeldung: 30.10.2019
(73) Patentinhaber: BSH Hausgeräte GmbH, 81739 München (DE)
(72) Erfinder: GALINDO PEREZ, Juan Jose, 50007 Zaragoza (ES); LLORENTE GIL, Sergio, 50009 Zaragoza (ES); NEUMAYER, Dan, 83233 Bernau (DE); OBON ABADIA, Carlos, 50016 Zaragoza (ES); PEREZ VISA, Enrique Javier, 50005 Zaragoza (ES)
(86) Internationale Anmeldenummer: PCT/IB2017/057820
(87) Internationale Veröffentlichungsnummer: WO 2018/116059

(56) Entgegenhaltungen:
- EP-A2- 1 130 336
- EP-A2- 1 441 567
- WO-A1-2015/155758
- DE-A1- 19 853 780
- US-A- 6 147 336

## Beschreibung

Die Erfindung betrifft eine Gargerätevorrichtung nach dem Oberbegriff des Patentanspruchs 1 und ein Verfahren zum Betrieb einer Gargerätevorrichtung nach Anspruch 9.

Aus dem Stand der Technik ist bereits eine Gargerätevorrichtung mit einer Gebläseeinheit bekannt. Die Gebläseeinheit weist ein um eine Drehachse drehbares Gebläserad auf und erzeugt mittels des Gebläserads in einem Betriebszustand einen Luftstrom. Die Gebläseeinheit wälzt mittels des erzeugten Luftstroms eine in einem Garraum befindliche Luft um. Ein Heizelement der Gargerätevorrichtung ist in einem montierten Zustand auf dem Gebläserad angeordnet und an dem Gebläserad befestigt. Das Heizelement ist als eine Schicht auf das Gebläserad aufgebracht und als ein Widerstandsheizelement ausgebildet. Eine elektrische Versorgung des Heizelements erfolgt über ein elektrisches Verbindungselement, welches das Heizelement in einem Betriebszustand mit elektrischem Strom versorgt. Die Dokumente DE 198 53 780 A1, US 6 147 336 A und WO 2015/155758 A1 offenbaren Gargerätevorrichtungen nach dem Stand der Technik.

Die Aufgabe der Erfindung besteht insbesondere darin, eine gattungsgemäße Vorrichtung mit verbesserten Eigenschaften hinsichtlich einer Konstruktion bereitzustellen. Die Aufgabe wird erfindungsgemäß durch die Merkmale der Patentansprüche 1 und 9 gelöst, während vorteilhafte Ausgestaltungen und Weiterbildungen der Erfindung den Unteransprüchen entnommen werden können.

Die Erfindung geht aus von einer Gargerätevorrichtung, insbesondere von einer Induktionsgargerätevorrichtung, vorteilhaft von einer Backofenvorrichtung und vorzugsweise von einer Induktionsbackofenvorrichtung, mit zumindest einer Gebläseeinheit, welche zumindest ein um eine Drehachse drehbares Gebläserad aufweist und welche in wenigstens einem Betriebszustand insbesondere mittels des Gebläserads zumindest einen Luftstrom erzeugt, und mit zumindest einem Heizelement, welches in wenigstens einem Betriebszustand zu einer Erhitzung des Gebläserads vorgesehen ist.

Es wird vorgeschlagen, dass das Heizelement als ein Induktionsheizelement ausgebildet ist. Unter einer "Gargerätevorrichtung", insbesondere unter einer "Induktionsgargerätevorrichtung", vorteilhaft unter einer "Backofenvorrichtung" und vorzugsweise unter einer "Induktionsbackofenvorrichtung", soll insbesondere zumindest ein Teil, insbesondere eine Unterbaugruppe, eines Gargeräts, insbesondere eines Induktionsgargeräts, vorteilhaft eines Backofens und vorzugsweise eines Induktionsbackofens, verstanden werden. Insbesondere weist die Gargerätevorrichtung zumindest eine Muffel auf, innerhalb welcher in wenigstens einem montierten Zustand zumindest ein Teil der Gebläseeinheit, insbesondere das Gebläserad, und insbesondere zusätzlich das Heizelement und vorteilhaft zumindest eine Gargeräterückwand angeordnet sind. Die Muffel begrenzt insbesondere zumindest einen Gargeräteinnenraum wenigstens teilweise und vorteilhaft gemeinsam mit zumindest einer Gargerätetür wenigstens im Wesentlichen. Die Muffel begrenzt insbesondere zumindest einen Garraum wenigstens teilweise und vorteilhaft gemeinsam mit zumindest einer Gargerätetür und/oder zumindest einer Gargeräterückwand wenigstens im Wesentlichen. Insbesondere ist der Garraum innerhalb des Gargeräteinnenraums angeordnet. Unter einer "Gebläseeinheit" soll eine Einheit mit zumindest einem um eine Drehachse drehbaren Gebläserad verstanden werden, welche in wenigstens einem Betriebszustand mittels des Gebläserads einen Luftstrom erzeugt und mittels des Luftstroms zumindest in einem Garraum befindliche Luft umwälzt und/oder in Bewegung versetzt. Insbesondere saugt die Gebläseeinheit mittels des Gebläserads in einem Garraum befindliche Luft, insbesondere mittig und vorteilhaft in einem Nahbereich der Drehachse, an das Gebläserad an und bläst die angesaugte Luft anschließend mittels des Gebläserads, insbesondere randseitig, von dem Gebläserad weg. Beispielsweise könnte die Gebläseeinheit zumindest ein Axialgebläse umfassen. Alternativ oder zusätzlich könnte die Gebläseeinheit zumindest ein Zentrifugalgebläse umfassen, welches in einem Vergleich zu einem Axialgebläse insbesondere eine größere erhitzbare Fläche aufweisen könnte, wodurch insbesondere ein größerer Wärmeübertrag und/oder eine größere Performance erreicht werden kann. Unter einer "Drehachse" soll insbesondere eine gedachte Gerade verstanden werden, um welche das Gebläserad drehbar gelagert ist und welche insbesondere wenigstens im Wesentlichen parallel zu einer Gebläsewelle verläuft, die das Gebläserad drehbar antreibt und um die das Gebläserad in wenigstens einem Betriebszustand insbesondere rotiert. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einem "Gebläserad" soll insbesondere ein um die Drehachse drehbar gelagertes Element verstanden werden, welches in wenigstens einem Betriebszustand in einem Garraum befindlicher Luft Arbeit, insbesondere in Form von kinetischer Energie, zuführt und/oder welches in wenigstens einem Betriebszustand eine Bewegungsrichtung von in einem Garraum befindlicher Luft ändert. Insbesondere besteht das Gebläserad wenigstens zu einem Großteil aus zumindest einem magnetischen Material, insbesondere aus zumindest einem ferromagnetischen Material. Das Heizelement weist insbesondere zumindest eine Hauptfunktion auf, welche in der Erhitzung des Gebläserads liegt. Insbesondere ist das Heizelement in wenigstens einem montierten Zustand an zumindest einer Position angeordnet, welche zu einer Erhitzung des Gebläserads geeignet ist und/oder welche eine optimale Erhitzung des Gebläserads erlaubt und/oder ermöglicht. Beispielsweise könnte das Heizelement in wenigstens einem montierten Zustand in einem Nahbereich des Gebläserads, insbesondere unter Vermeidung eines direkten Kontakts, angeordnet sein. Insbesondere könnte das Heizelement, insbesondere zusätzlich zu der Hauptfunktion, zumindest eine Nebenfunktion aufweisen, welche insbesondere in einer Erhitzung zumindest eines Garraums und/oder zumindest eines von einer Muffel wenigstens teilweise begrenzten Gargeräteinnenraums und/oder zumindest einer Gargeräterückwand und/oder zumindest einer Muffelwandung liegen könnte. Die Gargerätevorrichtung weist insbesondere zumindest eine elektrische Versorgungseinheit auf, welche insbesondere zu einer elektrischen Versorgung des Heizelements mit elektrischer Energie, insbesondere mit elektrischem Strom, vorgesehen ist. Insbesondere ist das Heizelement zu zumindest einer Spule gewickelt. Beispielsweise könnte das Heizelement zumindest zwei, insbesondere zumindest fünf, vorteilhaft zumindest zehn, besonders vorteilhaft zumindest fünfzehn und bevorzugt zumindest zwanzig Wicklungen aufweisen. Das Heizelement weist insbesondere zumindest einen elektrischen Leiter auf, welcher insbesondere zu einer Spule gewickelt ist und insbesondere die Wicklungen des Heizelements ausbildet. Die Versorgungseinheit versorgt das Heizelement insbesondere in wenigstens einem Betriebszustand mit elektrischer Energie. Das Heizelement erzeugt in wenigstens einem Betriebszustand insbesondere zumindest ein elektromagnetisches Wechselfeld. Insbesondere erzeugt das Heizelement, insbesondere mittels des elektromagnetischen Wechselfelds, in zumindest einem wenigstens zu einem Großteil ferromagnetischen Element, wie beispielsweise dem Gebläserad und/oder zumindest einer Gargeräterückwand und/oder zumindest einer Muffelwandung, Foucault-Ströme. In wenigstens einem Betriebszustand führen insbesondere die von dem Heizelement in dem wenigstens zu einem Großteil ferromagnetischen Element erzeugten Foucault-Ströme aufgrund zumindest eines elektrischen Widerstands des Elements zu einer Erhitzung des Elements. Das von dem Heizelement erhitzte Element gibt in wenigstens einem Betriebszustand insbesondere die Hitze an eine Umgebungsluft ab. Beispielsweise könnte das Gebläserad und/oder zumindest eine Gargeräterückwand und/oder zumindest einer Muffelwandung in wenigstens einem Betriebszustand die Hitze an eine aus einem Garraum angesaugte Luft abgeben. Insbesondere könnte das Gebläserad wenigstens im Wesentlichen zeitgleich die aus dem Garraum angesaugte Luft wieder zurück in den Garraum blasen. Dadurch kann insbesondere auf ein Widerstandsheizelement, welches zu einer Erhitzung von Luft sehr hohe Temperaturen erreicht, verzichtet werden, da insbesondere das Gebläserad selbst zu einem Heizer, insbesondere zu einem Widerstandsheizer, wird und insbesondere Hitze in einer Oberfläche des Gebläserads erzeugt wird. Alternativ oder zusätzlich könnte eine Erhitzung des wenigstens zu einem Großteil ferromagnetischen Elements insbesondere mittels Ummagnetisierungseffekten und/oder Ummagnetisierungsverlusten erfolgen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere eine Konstruktion verbessert werden. Insbesondere kann auf eine elektrische Anbindung eines auf dem Gebläserad befindlichen Heizelements verzichtet werden, wodurch insbesondere eine einfache Konstruktion erzielt werden kann und/oder Probleme hinsichtlich einer elektrischen Verkabelung vermieden werden können. In einem Vergleich mit einem Widerstandsheizelement kann insbesondere bei geringer Temperaturbeanspruchung von Materialien der beteiligten Objekte eine größere Leistung, insbesondere durch eine größere erhitzbare Fläche zur Übertragung von Hitze, ermöglicht werden. Insbesondere kann eine Überhitzug und/oder ein vorzeitiger Defekt des Heizelements vermieden werden. Insbesondere kann das Heizelement insbesondere unabhängig von einem Betrieb der Gebläseeinheit betrieben und/oder eine langlebige Ausgestaltung bereitgestellt werden.

Ferner wird vorgeschlagen, dass das Heizelement zumindest einen elektrischen Leiter aufweist, welcher wenigstens im Wesentlichen starr ausgebildet ist. Insbesondere besteht der Leiter wenigstens zu einem Großteil aus zumindest einem starren Material. Beispielsweise könnte der Leiter wenigstens zu einem Großteil aus Kupfer bestehen. Vorteilhaft besteht der Leiter wenigstens zu einem Großteil aus Eisen und/oder Stahl, wodurch insbesondere eine kostengünstige und/oder wirtschaftlich lohnende Ausgestaltung erzielt werden kann. Unter "starr" soll insbesondere unbeweglich und/oder steif verstanden werden. Insbesondere ändert sich ein Abstand benachbarter Wicklungen des Leiters relativ zueinander bei Einwirken einer Kraft von mindestens 10 N, insbesondere von mindestens 20 N, vorteilhaft von mindestens 50 N und vorzugsweise von mindestens 100 N auf zumindest eine der benachbarten Wicklungen um maximal 1 mm, insbesondere um maximal 0,1 mm, vorteilhaft um maximal 0,01 mm und vorzugsweise um maximal 0,001 mm. In wenigstens einem Betriebszustand ist der elektrische Leiter insbesondere von elektrischem Strom und vorteilhaft von einem, insbesondere hochfrequenten, elektrischen Wechselstrom durchflossen. Dadurch kann insbesondere eine besonders hohe Stabilität erreicht werden. Insbesondere kann auf einen Spulenträger verzichtet werden, wodurch insbesondere geringe Kosten erzielt werden können und/oder wodurch der Leiter insbesondere flexibel positioniert werden kann, da vorteilhaft erhitzte Luftströme den Leiter ungehindert passieren können.

Zudem wird vorgeschlagen, dass der Leiter zumindest abschnittsweise wenigstens im Wesentlichen konzentrisch um die Drehachse gewickelt ist. Beispielsweise könnte ein Anteil in einem Bereich von 10 % bis 50 %, insbesondere von 20 % bis 40 % und vorteilhaft von 25 % bis 35 % einer Längserstreckung des Leiters um die Drehachse gewickelt sein. Insbesondere ist ein Anteil von mindestens 60 %, insbesondere von mindestens 70 %, vorteilhaft von mindestens 80 % und vorzugsweise von mindestens 90 % einer Längserstreckung des Leiters um die Drehachse gewickelt. Die Versorgungseinheit ist insbesondere zu einer elektrischen Versorgung des Heizelements vorgesehen und versorgt in wenigstens einem Betriebszustand insbesondere den elektrischen Leiter mit elektrischem Strom. Die Gargerätevorrichtung weist insbesondere zumindest eine Heizelementanbindung auf, welche in wenigstens einem montierten Zustand den Leiter und die Versorgungseinheit miteinander verbindet. Beispielsweise könnte die Heizelementanbindung und der elektrische Leiter wenigstens im Wesentlichen einstückig miteinander verbunden sein. Die Heizelementanbindung und der elektrische Leiter könnten insbesondere aus demselben Material ausgebildet sein. Insbesondere weist die Heizelementanbindung eine Längserstreckung auf, welche von einer Längserstreckung des Leiters verschieden ist. Unter einer "Längserstreckung" eines Objekts soll insbesondere eine Erstreckung des Objekts in einem abgewickelten Zustand entlang einer Längserstreckungsrichtung des Objekts verstanden werden. Unter einer "Längserstreckungsrichtung" eines Objekts soll insbesondere eine Richtung verstanden werden, welche parallel zu einer längsten Seite eines kleinsten gedachten geometrischen Quaders ausgerichtet ist, welcher das Objekt bei einer Abwicklung des Objekts in einer Ebene gerade noch vollständig umschließt. Unter einer "Erstreckung" eines Objekts soll insbesondere ein maximaler Abstand zweier Punkte einer senkrechten Projektion des Objekts auf eine Ebene verstanden werden. Dadurch kann insbesondere eine gleichmäßige Erhitzung des Gebläserads ermöglicht werden.

Weiterhin wird vorgeschlagen, dass der Leiter zumindest abschnittsweise zumindest einen Teilbereich des Gebläserads bei zumindest einer Betrachtung entlang zumindest einer zu der Drehachse senkrechten Richtung wenigstens im Wesentlichen umgibt. Bei einer Betrachtung in der zu der Drehachse senkrechten Richtung umgibt der Leiter den Teilbereich des Gebläserads bezüglich zumindest eines geometrischen Schwerpunkts und/oder Mittelpunkts des Teilbereichs den Teilbereich über einen Winkelbereich von mindestens 180°, insbesondere von mindestens 270°, vorteilhaft von mindestens 330° und vorzugsweise von mindestens 350°. Insbesondere weist zumindest eine Wicklung des Leiters zumindest einen ersten Teilbereich und zumindest einen zweiten Teilbereich auf, welche in zumindest einer Axialrichtung, welche insbesondere wenigstens im Wesentlichen parallel zu der Drehachse ausgerichtet ist, zueinander beabstandet sind. Insbesondere weist zumindest eine Wicklung des Leiters zumindest einen ersten Teilbereich und zumindest einen zweiten Teilbereich auf, welche in zumindest einer Vertikalrichtung, welche insbesondere wenigstens im Wesentlichen senkrecht zu der Drehachse und insbesondere wenigstens im Wesentlichen senkrecht zu einer Haupterstreckungsebene eines Muffelbodens ausgerichtet ist, zueinander beabstandet sind. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Unter einer "Haupterstreckungsebene" eines Objekts soll insbesondere eine Ebene verstanden werden, welche parallel zu einer größten Seitenfläche eines kleinsten gedachten geometrischen Quaders ist, welcher das Objekt gerade noch vollständig umschließt, und insbesondere durch den Mittelpunkt des Quaders verläuft. Dadurch können insbesondere einander in einer zu der Drehachse parallelen Richtung gegenüberliegende Oberflächen des Teilbereichs gleichmäßig erhitzt werden, wodurch insbesondere thermische Spannungen innerhalb des Teilbereichs vermieden werden können.

Der Leiter könnte beispielsweise zu einer Flachspule gewickelt sein. Beispielsweise könnten Wicklungen des Leiters in einer, insbesondere einzigen, Ebene angeordnet sein. Vorzugsweise sind Wicklungen des Leiters in zumindest zwei, insbesondere in zumindest drei, vorteilhaft in zumindest vier und vorzugsweise in zumindest fünf verschiedenen Ebenen angeordnet. Wicklungen des Leiters könnten beispielsweise alternativ oder zusätzlich in zumindest acht, insbesondere in zumindest zehn, vorteilhaft in zumindest fünfzehn und vorzugsweise in zumindest zwanzig verschiedenen Ebenen angeordnet sein. Dadurch kann insbesondere eine hohe Flexibilität und/oder eine hohe Gestaltungsfreiheit erreicht werden.

Insbesondere sind die verschiedenen Ebenen wenigstens im Wesentlichen parallel zueinander angeordnet. Beispielsweise könnten die Ebenen wenigstens im Wesentlichen parallel zu einer Muffelseitenwand und/oder zu einem Muffelboden ausgerichtet sein. Vorzugsweise sind die verschiedenen Ebenen wenigstens im Wesentlichen parallel zu einer Muffelrückwand ausgerichtet. Insbesondere sind zumindest zwei Wicklungen des Leiters in zumindest einer Axialrichtung, welche insbesondere wenigstens im Wesentlichen parallel zu der Drehachse ausgerichtet ist, zueinander beabstandet angeordnet. Insbesondere sind zumindest zwei Wicklungen des Leiters in zumindest einer Radialrichtung, welche insbesondere wenigstens im Wesentlichen senkrecht zu der Drehachse ausgerichtet ist, zueinander beabstandet angeordnet. Dadurch kann insbesondere in einem Vergleich zu einer Ausgestaltung, bei welcher die verschiedenen Ebenen wenigstens im Wesentlichen senkrecht zu einer Muffelrückwand ausgerichtet sind, eine platzsparende Ausgestaltung und/oder eine große Einschubtiefe in die Muffel erzielt werden.

Weiterhin wird vorgeschlagen, dass der Leiter bei einer Betrachtung in einer Querschnittsebene, welche die Drehachse umfasst und insbesondere senkrecht zu einer Muffelrückwand ausgerichtet ist, eine stufenartige Gestalt ausbildet. Insbesondere existieren bei einer Betrachtung in der Querschnittsebene zumindest eine erste Gerade, welche zumindest zwei benachbarte Wicklungen miteinander verbindet, und zumindest eine zweite Gerade, welche zumindest zwei benachbarte Wicklungen, von denen sich zumindest eine von den mittels der ersten Geraden miteinander verbundenen Wicklungen unterscheidet, miteinander verbindet und welche insbesondere wenigstens im Wesentlichen senkrecht zu der ersten Geraden ausgerichtet ist. Dadurch kann das Gebläserad insbesondere von mehreren Seiten her erhitzt und/oder wenigstens teilweise innerhalb des Leiters angeordnet werden, wodurch insbesondere eine besonders gleichmäßige Erhitzung des Gebläserads ermöglicht werden kann.

Ferner wird vorgeschlagen, dass die Gargerätevorrichtung zumindest eine Gargeräterückwand aufweist, wobei das Heizelement in dem Betriebszustand zusätzlich zu einer Erhitzung der Gargeräterückwand vorgesehen ist. Unter einer "Gargeräterückwand" soll insbesondere eine Einheit verstanden werden, welche in wenigstens einem montierten Zustand einen Garraum wenigstens teilweise begrenzt und welche insbesondere eine Haupterstreckungsebene aufweist, die wenigstens im Wesentlichen parallel zu einer Haupterstreckungsebene einer Muffelrückwand ausgerichtet ist. In dem Betriebszustand ist das Heizelement insbesondere wenigstens im Wesentlichen gleichzeitig und vorteilhaft mittels desselben elektromagnetischen Wechselfelds zu einer Erhitzung der Gargeräterückwand und des Gebläserads vorgesehen. Insbesondere besteht die Gargeräterückwand wenigstens zu einem Großteil aus zumindest einem magnetischen Material, insbesondere aus zumindest einem ferromagnetischen Material. In einer alternativen nicht beanspruchte Ausgestaltung könnte die Gargeräterückwand wenigstens zu einem Großteil aus zumindest einem nichtferromagnetischen Material bestehen, wodurch eine Erhitzung der Gargeräterückwand durch das Heizelement wenigstens im Wesentlichen vermieden werden könnte. Dadurch kann ein von dem Heizelement erzeugtes elektromagnetisches Wechselfeld insbesondere optimal ausgenutzt und/oder eine besonders effiziente und/oder schnelle Erhitzung eines Garraums ermöglicht werden.

Beispielsweise könnten das Heizelement und das Gebläserad wenigstens im Wesentlichen innerhalb eines Garraums und/oder bei einer Betrachtung von einer Frontseite aus vor der Gargeräterückwand angeordnet sein. Vorzugsweise Erfindungsgemäß sind das Heizelement und das Gebläserad bei einer Betrachtung von einer Frontseite aus hinter der Gargeräterückwand und zwischen der Gargeräterückwand und einer Muffelrückwand, welche insbesondere einen Gargeräteinnenraum begrenzt, angeordnet. Dadurch kann insbesondere eine geschützte Anordnung des Heizelements und des Gebläserads erzielt werden. Eine Effizienz des Systems Heizelement und Gebläseeinheit ist insbesondere unkritisch, da eventuelle Leitungsverluste und/oder eine Wärmeabgabe, welche insbesondere bei einem Betrieb des Heizelements entstehen können, innerhalb eines Gargeräteinnenraums entstehen und daher insbesondere zu einer Erhitzung des Garraums genutzt werden können.

Ein besonders hoher Bedienkomfort kann insbesondere bereitgestellt werden durch ein Gargerät, insbesondere durch ein Induktionsgargerät, vorteilhaft durch einen Backofen und vorzugsweise durch einen Induktionsbackofen, mit zumindest einer erfindungsgemäßen Gargerätevorrichtung, insbesondere mit zumindest einer erfindungsgemäßen Induktionsgargerätevorrichtung, vorteilhaft mit zumindest einer erfindungsgemäßen Backofenvorrichtung und vorzugsweise mit zumindest einer erfindungsgemäßen Induktionsbackofenvorrichtung.

Ein Bedienkomfort kann insbesondere weiter gesteigert werden durch ein Verfahren zum Betrieb einer erfindungsgemäßen Gargerätevorrichtung, insbesondere einer erfindungsgemäßen Induktionsgargerätevorrichtung, vorteilhaft einer erfindungsgemäßen Backofenvorrichtung und vorzugsweise einer erfindungsgemäßen Induktionsbackofenvorrichtung, mit zumindest einer Gebläseeinheit, welche zumindest ein um eine Drehachse drehbares Gebläserad aufweist und welche insbesondere in wenigstens einem Betriebszustand mittels des Gebläserads zumindest einen Luftstrom erzeugt. Es wird vorgeschlagen, dass das Gebläserad in wenigstens einem Betriebszustand induktiv erhitzt wird.

Die Gargerätevorrichtung soll hierbei nicht auf die oben beschriebene Anwendung und Ausführungsform beschränkt sein. Insbesondere kann die Gargerätevorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Gargerät mit einer Gargerätevorrichtung in einer schematischen Darstellung,
- Fig. 2: eine Gebläseeinheit, ein Heizelement, eine Gargeräterückwand und eine Muffelrückwand der Gargerätevorrichtung in einer schematischen Schnittdarstellung,
- Fig. 3: eine Gebläseeinheit, ein Heizelement, eine Gargeräterückwand und eine Muffelrückwand einer alternativen Gargerätevorrichtung in einer schematischen Schnittdarstellung und
- Fig. 4: eine Gebläseeinheit, ein Heizelement und eine Gargeräterückwand einer alternativen Gargerätevorrichtung in einer schematischen Darstellung.

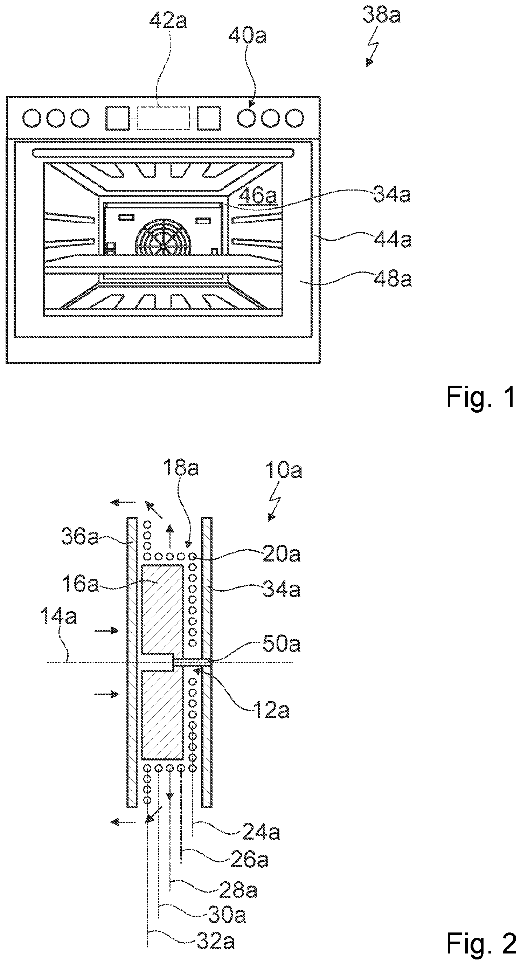

Fig. 1 zeigt ein Gargerät 38a mit einer Gargerätevorrichtung 10a. Beispielsweise könnte das Gargerät als ein Grillgerät und/oder als ein Mikrowellengerät ausgebildet sein. Im vorliegenden Ausführungsbeispiel ist das Gargerät 38a als ein Backofen ausgebildet.

Die Gargerätevorrichtung 10a weist eine Muffel 44a auf. Die Muffel 44a begrenzt einen Gargeräteinnenraum 46a teilweise. Die Muffel 44a begrenzt den Gargeräteinnenraum 46a gemeinsam mit einer Gargerätetür 48a im Wesentlichen. Die Gargerätevorrichtung 10a weist die Gargerätetür 48a auf.

Die Muffel 44a weist einen Muffelboden, eine Muffeldecke, zwei Muffelseitenwände und eine Muffelrückwand 34a auf. Der Muffelboden, die Muffeldecke, die Muffelseitenwände und die Muffelrückwand 34a definieren gemeinsam mit der Gargerätetür 48a den Gargeräteinnenraum 46a im Wesentlichen.

Die Gargerätevorrichtung 10a weist eine Gebläseeinheit 12a auf (vgl. Fig. 2). Die Gebläseeinheit 12a weist ein um eine Drehachse 14a drehbares Gebläserad 16a auf. In einem Betriebszustand erzeugt die Gebläseeinheit 12a mittels des Gebläserads 16a einen Luftstrom.

Bei einer Betrachtung von einer Frontseite aus ist die Gebläseeinheit 12a in einem Rückbereich des Gargeräteinnenraums 46a angeordnet. Die Gebläseeinheit 12a ist in einem Nahbereich der Muffelrückwand 34a angeordnet.

Die Gebläseeinheit 12a weist eine Gebläsewelle 50a auf. Die Gebläsewelle 50a koppelt das Gebläserad 16a an die Muffelrückwand 34a. Die Gebläsewelle 50a lagert das Gebläserad 16a drehbar relativ zu der Muffelrückwand 34a. Die Drehachse 14a verläuft im Wesentlichen mittig durch die Gebläsewelle 50a. Die Gebläsewelle 50a definiert die Drehachse 14a im Wesentlichen.

Die Gargerätevorrichtung 10a weist eine Bedienerschnittstelle 40a zu einer Eingabe und/oder Auswahl von Betriebsparametern auf, beispielsweise einer Heizleistung und/oder einer Heizleistungsdichte und/oder einer Heizzone. Die Bedienerschnittstelle 40a ist zu einer Ausgabe eines Werts eines Betriebsparameters an einen Bediener vorgesehen.

Die Gargerätevorrichtung 10a weist eine Steuereinheit 42a auf. Die Steuereinheit 42a ist dazu vorgesehen, in Abhängigkeit von mittels der Bedienerschnittstelle 40a eingegebenen Betriebsparametern Aktionen auszuführen und/oder Einstellungen zu verändern. Die Steuereinheit 42a regelt in einem Heizbetriebszustand eine Energiezufuhr zu zumindest einem Heizelement 18a (vgl. Fig. 2).

Die Gargerätevorrichtung 10a weist ein Heizelement 18a auf. Beispielsweise könnte die Gargerätevorrichtung, insbesondere zusätzlich zu dem Heizelement, zumindest ein weiteres Heizelement und insbesondere zumindest zwei, vorteilhaft zumindest drei, besonders vorteilhaft zumindest fünf und vorzugsweise mehrere weitere Heizelemente aufweisen. Von den weiteren Heizelementen wird im Folgenden lediglich eines beschrieben. Das weitere Heizelement könnte beispielsweise zu einer Erzeugung von Oberhitze und/oder Unterhitze vorgesehen sein und insbesondere in einem Nahbereich einer Muffeldecke und/oder eines Muffelbodens angeordnet sein.

Das Heizelement 18a ist in dem Betriebszustand zu einer Erhitzung des Gebläserads 16a vorgesehen. In dem Betriebszustand erhitzt das Heizelement 18 das Gebläserad 16a. Das Heizelement 18a ist in einem Nahbereich des Gebläserads 16a angeordnet.

In einem Verfahren zum Betrieb der Gargerätevorrichtung 10a wird das Gebläserad 16a in dem Betriebszustand induktiv erhitzt. In dem Betriebszustand erhitzt das Heizelement 18a das Gebläserad 16a induktiv. Das Heizelement 18a ist als ein Induktionsheizelement ausgebildet.

Das Heizelement 18a weist einen elektrischen Leiter 20a auf (vgl. Fig. 2). Der Leiter 20a ist im Wesentlichen starr ausgebildet. Der Leiter 20a ist zu einer Spule gewickelt. Im vorliegenden Ausführungsbeispiel ist der Leiter 20a abschnittsweise im Wesentlichen konzentrisch um die Drehachse 14a gewickelt.

Wicklungen des Leiters 20a sind in verschiedenen Ebenen 24a, 26a, 28a, 30a, 32a angeordnet. Im vorliegenden Ausführungsbeispiel sind Wicklungen des Leiters 20a in fünf verschiedenen Ebenen 24a, 26a, 28a, 30a, 32a angeordnet. Die Ebenen 24a, 26a, 28a, 30a, 32a, in welchen Wicklungen des Leiters 20a angeordnet sind, sind im Wesentlichen senkrecht zu der Drehachse 14a ausgerichtet. Die Ebenen 24a, 26a, 28a, 30a, 32a, in welchen Wicklungen des Leiters 20a angeordnet sind, sind im Wesentlichen parallel zu der Muffelrückwand 34a angeordnet.

Bei Betrachtung in einer Querschnittsebene, welche die Drehachse 14a umfasst, bildet der Leiter 20a eine stufenartige Gestalt aus. Der Leiter 20a bildet ausgehend von der Drehachse 14a in der Querschnittsebene eine stufenartige Gestalt aus. In der Querschnittsebene ist der Leiter 20a im Wesentlichen spiegelsymmetrisch zu der Drehachse 14a angeordnet. Der Leiter 20a bildet mittels der stufenartigen Gestalt einen Aufnahmebereich zu einer Aufnahme des Gebläserads 16a aus.

Das Heizelement 18a erhitzt das Gebläserad 16a in dem Betriebszustand von einem Seitenbereich des Gebläserads 16a aus über im Wesentlichen einen gesamten Umfang des Gebläserads 16a. In dem Betriebszustand erhitzt das Heizelement 18a das Gebläserad 16a von einer Rückseite des Gebläserads 16a aus. Das Heizelement 18a erhitzt in dem Betriebszustand zusätzlich eine Gargeräterückwand 36a. In dem Betriebszustand ist das Heizelement 18a zusätzlich zu einer Erhitzung der Gargeräterückwand 36a vorgesehen.

Die Gargerätevorrichtung 10a weist die Gargeräterückwand 36a auf. Die Gargeräterückwand 36a ist innerhalb des Gargeräteinnenraums 46a angeordnet. Die Gargeräterückwand 36 begrenzt einen Garraum teilweise. Gemeinsam mit der Muffeldecke, dem Muffelboden, den Muffelseitenwänden und der Gargerätetür 48a begrenzt die Gargeräterückwand 36a den Garraum im Wesentlichen. Die Gargeräterückwand 36a ist bei einer Betrachtung von einer Frontseite aus vor der Muffelrückwand 34a angeordnet.

Bei einer Betrachtung von einer Frontseite aus sind das Heizelement 18a und das Gebläserad 16a hinter der Gargeräterückwand 36a angeordnet. Das Heizelement 18a und das Gebläserad 16a sind bei einer Betrachtung von einer Frontseite aus zwischen der Gargeräterückwand 36a und der Muffelrückwand 34a angeordnet. Im vorliegenden Ausführungsbeispiel ist das Gebläserad 16a als ein Axialgebläse ausgebildet.

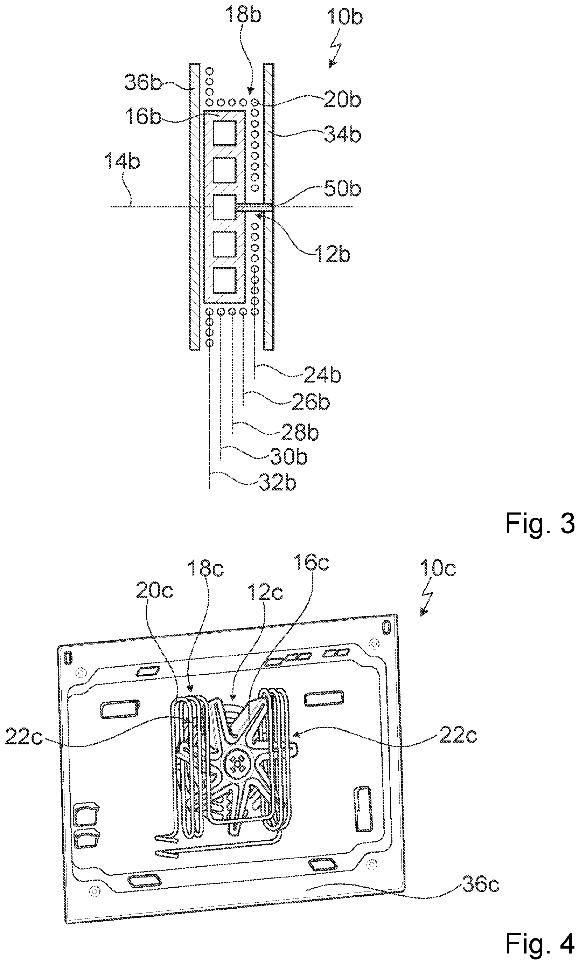

In Fig. 3 und 4 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 und 2 verwiesen werden kann. Zur Unterscheidung der Ausführungsbeispiele ist der Buchstabe a in den Bezugszeichen des Ausführungsbeispiels in den Fig. 1 und 2 durch die Buchstaben b und c in den Bezugszeichen der Ausführungsbeispiele der Fig. 3 und 4 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 und 2 verwiesen werden.

Fig. 3 zeigt eine Gebläseeinheit 12b, ein Heizelement 18b, eine Gargeräterückwand 36b und eine Muffelrückwand 34b einer alternativen Gargerätevorrichtung 10b. Die Gebläseeinheit 12b weist ein um eine Drehachse 14b drehbares Gebläserad 16b auf. Im vorliegenden Ausführungsbeispiel ist das Gebläserad 16b als ein Radialgebläse ausgebildet.

Fig. 4 zeigt eine Gebläseeinheit 12c, ein Heizelement 18c und eine Gargeräterückwand 36c einer alternativen Gargerätevorrichtung 10c. Die Gebläseeinheit 12c weist ein um eine Drehachse 14c drehbares Gebläserad 16c auf. Das Heizelement 18c ist in einem Betriebszustand zu einer Erhitzung des Gebläserads 16c vorgesehen.

Das Heizelement 18c weist einen elektrischen Leiter 20c auf (vgl. Fig. 2). Der Leiter 20c ist im Wesentlichen starr ausgebildet. Der Leiter 20c ist zu einer Spule gewickelt. Im vorliegenden Ausführungsbeispiel umgibt der Leiter 20c abschnittsweise Teilbereiche 22c des Gebläserads 16c bei einer Betrachtung entlang einer zu der Drehachse 14c senkrechten Richtung im Wesentlichen.

### Bezugszeichen

- 10: Gargerätevorrichtung
- 12: Gebläseeinheit
- 14: Drehachse
- 16: Gebläserad
- 18: Heizelement
- 20: Leiter
- 22: Teilbereich
- 24: Ebene
- 26: Ebene
- 28: Ebene
- 30: Ebene
- 32: Ebene
- 34: Muffelrückwand
- 36: Gargeräterückwand
- 38: Gargerät
- 40: Bedienerschnittstelle
- 42: Steuereinheit
- 44: Muffel
- 46: Gargeräteinnenraum
- 48: Gargerätetür
- 50: Gebläsewelle

## Patentansprüche

1. Gargerätevorrichtung mit zumindest einer Gebläseeinheit (12a-c), welche zumindest ein um eine Drehachse (14a-c) drehbares Gebläserad (16a-c) aufweist, mit zumindest einem Heizelement (18a-c), welches in wenigstens einem Betriebszustand zu einer Erhitzung des Gebläserads (16a-c) vorgesehen ist, wobei das Heizelement (18a-c) als ein Induktionsheizelement ausgebildet ist, mit zumindest einer Gargeräterückwand (36a-c), wobei das Heizelement (18a-c) in dem Betriebszustand zusätzlich zu einer Erhitzung der Gargeräterückwand (36a-c) vorgesehen ist, und mit zumindest einer Muffel (44a-c), innerhalb welcher in wenigstens einem montierten Zustand zumindest das Gebläserad (16a-c) und zusätzlich das Heizelement (18a-c) und zumindest die Gargeräterückwand (36a-c) angeordnet sind, **dadurch gekennzeichnet, dass** das Heizelement (18a-c) und das Gebläserad (16a-c) bei einer Betrachtung von einer Frontseite aus hinter der Gargeräterückwand (36a-c) und zwischen der Gargeräterückwand (36a-c) und einer Muffelrückwand (34a-c) der Muffel (44a-c) angeordnet sind, wobei das Heizelement (18a-c) in einem Nahbereich des Gebläserads (16a-c) angeordnet ist.

2. Gargerätevorrichtung nach Anspruch 1, **dadurch gekennzeichnet, dass** das Heizelement (18a-c) zumindest einen elektrischen Leiter (20a-c) aufweist, welcher wenigstens im Wesentlichen starr ausgebildet ist.

3. Gargerätevorrichtung nach Anspruch 2, **dadurch gekennzeichnet, dass** der Leiter (20a-b) zumindest abschnittsweise wenigstens im Wesentlichen konzentrisch um die Drehachse (14a-b) gewickelt ist.

4. Gargerätevorrichtung nach Anspruch 2 oder 3, **dadurch gekennzeichnet, dass** der Leiter (20c) zumindest abschnittsweise zumindest einen Teilbereich (22c) des Gebläserads (16c) bei zumindest einer Betrachtung entlang zumindest einer zu der Drehachse (14c) senkrechten Richtung wenigstens im Wesentlichen umgibt.

5. Gargerätevorrichtung nach einem der Ansprüche 2 bis 4, **dadurch gekennzeichnet, dass** Wicklungen des Leiters (20a-b) in zumindest zwei verschiedenen Ebenen (24a-b, 26a-b, 28a-b, 30a-b, 32a-b) angeordnet sind.

6. Gargerätevorrichtung nach Anspruch 5, **dadurch gekennzeichnet, dass** die verschiedenen Ebenen (24a-b, 26a-b, 28a-b, 30a-b, 32a-b) wenigstens im Wesentlichen parallel zu einer Muffelrückwand (34a-b) ausgerichtet sind.

7. Gargerätevorrichtung nach einem der Ansprüche 2 bis 6, **dadurch gekennzeichnet, dass** der Leiter (20a-b) bei einer Betrachtung in einer Querschnittsebene, welche die Drehachse (14a-b) umfasst, eine stufenartige Gestalt ausbildet.

8. Gargerät mit zumindest einer Gargerätevorrichtung (10a-c) nach einem der vorhergehenden Ansprüche.

9. Verfahren zum Betrieb einer Gargerätevorrichtung (10a-c), insbesondere nach einem der Ansprüche 1 bis 7, mit zumindest einer Gebläseeinheit (12a-c), welche zumindest ein um eine Drehachse (14a-c) drehbares Gebläserad (16a-c) aufweist, mit zumindest einer Gargeräterückwand (36a-c), mit zumindest einer Muffel (44a-c), und mit einem Heizelement (18a-c), welches mit dem Gebläserad (16a-c) bei einer Betrachtung von einer Frontseite aus hinter der Gargeräterückwand (36a-c) und zwischen der Geräterückwand (36a-c) und einer Muffelrückwand (34a-c) der Muffel (44a-c) angeordnet ist, wobei das Heizelement (18a-c) in einem Nahbereich des Gebläserads (16a-c) angeordnet ist, wobei das Gebläserad (16a-c) in wenigstens einem Betriebszustand induktiv erhitzt wird, und wobei in dem Betriebszustand die Gargeräterückwand (36a-c) zusätzlich erhitzt wird.

## Claims

1. Cooking appliance apparatus with at least one fan unit (12a-c), which has at least one fan wheel (16a-c), which can be rotated about a rotation axis (14a-c), with at least one heating element (18a-c), which is provided to heat the fan wheel (16a-c) in at least one operating state, wherein the heating element (18a-c) is configured as an induction heating element, with at least one cooking appliance rear wall (36a-c), wherein the heating element (18a-c) is also provided to heat the cooking appliance rear wall (36a-c) in the operating state, and with at least one muffle (44a-c), within which at least the fan wheel (16a-c) and also the heating element (18a-c) and at least the cooking appliance rear wall (36a-c) are arranged in at least one mounted state, **characterised in that** the heating element (18a-c) and the fan wheel (16a-c) are arranged behind the cooking appliance rear wall (36a-c) when viewed from a front face and between the cooking appliance rear wall (36a-c) and a muffle rear wall (34a-c) of the muffle (44a-c), wherein the heating element (18a-c) is arranged in proximity to the fan wheel (16a-c).

2. Cooking appliance apparatus according to claim 1, **characterised in that** the heating element (18a-c) has at least one electrical conductor (20a-c), which is configured as at least essentially rigid.

3. Cooking appliance apparatus according to claim 2, **characterised in that** the conductor (20a-b) is at least partially wound at least essentially concentrically about the rotation axis (14a-b).

4. Cooking appliance apparatus according to claim 2 or 3, **characterised in that** the conductor (20c) at least essentially at least partially encloses at least one partial region (22c) of the fan wheel (16c) at least when viewed along at least one direction perpendicular to the rotation axis (14c).

5. Cooking appliance apparatus according to one of claims 2 to 4, **characterised in that** the windings of the conductor (20a-b) are arranged in at least two different planes (24a-b, 26a-b, 28a-b, 30a-b, 32a-b).

6. Cooking appliance apparatus according to claim 5, **characterised in that** the different planes (24a-b, 26a-b, 28a-b, 30a-b, 32a-b) are aligned at least essentially parallel to a muffle rear wall (34a-b).

7. Cooking appliance apparatus according to one of claims 2 to 6, **characterised in that** the conductor (20a-b) has a stepped configuration when viewed in a cross-sectional plane, which includes the rotation axis (14a-b).

8. Cooking appliance with at least one cooking appliance apparatus (10a-c) according to one of the preceding claims.

9. Method for operating a cooking appliance apparatus (10a-c), in particular according to one of claims 1 to 7, with at least one fan unit (12a-c), which has at least one fan wheel (16a-c), which can be rotated about a rotation axis (14a-c), with at least one cooking appliance rear wall (36a-c), with at least one muffle (44a-c) and with a heating element (18a-c), which is arranged with the fan wheel (16a-c) behind the cooking appliance rear wall (36a-c) when viewed from a front face and between the cooking appliance rear wall (36a-c) and a muffle rear wall (34a-c) of the muffle (44a-c), wherein the heating element (18a-c) is arranged in proximity to the fan wheel (16a-c), wherein the fan wheel (16a-c) is heated inductively in at least one operating state and wherein the cooking appliance rear wall (36a-c) is also heated in the operating state.

## Revendications

1. Dispositif d'appareil de cuisson avec au moins une unité soufflante (12a-c), laquelle présente au moins une roue de ventilateur (16a-c) rotative autour d'un axe de rotation (14a-c), avec au moins un élément chauffant (18a-c), prévu pour chauffer dans au moins un état de fonctionnement la roue de ventilateur (16a-c), dans lequel l'élément chauffant (18a-c) est formé sous la forme d'un élément chauffant à induction, avec au moins une paroi arrière d'appareil de cuisson (36a-c), dans lequel l'élément chauffant (18a-c) est prévu pour chauffer en outre, dans l'état de fonctionnement, la paroi arrière d'appareil de cuisson (36a-c), et avec au moins un moufle (44a-c) au sein duquel au moins la roue de ventilateur (16a-c) et en outre l'élément chauffant (18a-c) et au moins la paroi arrière d'appareil de cuisson (36a-c) sont disposés dans au moins un état monté, **caractérisé en ce que** l'élément chauffant (18a-c) et la roue de ventilateur (16a-c) sont disposés, en vue frontale, derrière la paroi arrière d'appareil de cuisson (36a-c) et entre la paroi arrière d'appareil de cuisson (36a-c) et une paroi arrière de moufle (34a-c) du moufle (44a-c), dans lequel l'élément chauffant (18a-c) est disposé dans une zone proche de la roue de ventilateur (16a-c).

2. Dispositif d'appareil de cuisson selon la revendication 1, **caractérisé en ce que** l'élément chauffant (18a-c) présente au moins un conducteur électrique (20a-c), lequel est formé de façon au moins essentiellement rigide.

3. Dispositif d'appareil de cuisson selon la revendication 2, **caractérisé en ce que** le conducteur (20a-b) est, au moins par sections, embobiné de façon au moins essentiellement concentrique autour de l'axe de rotation (14a-b).

4. Dispositif d'appareil de cuisson selon la revendication 2 ou 3, **caractérisé en ce que** le conducteur (20c) entoure au moins essentiellement, au moins par sections, au moins une zone partielle (22c) de la roue de ventilateur (16c) dans au moins une vue le long d'au moins une direction perpendiculaire à l'axe de rotation (14c).

5. Dispositif d'appareil de cuisson selon l'une des revendications 2 à 4, **caractérisé en ce que** les bobinages du conducteur (20a-b) sont disposés dans au moins deux plans différents (24a-b, 26a-b, 28a-b, 30a-b, 32a-b).

6. Dispositif d'appareil de cuisson selon la revendication 5, **caractérisé en ce que** les différents plans (24a-b, 26a-b, 28a-b, 30a-b, 32a-b) sont au moins essentiellement dirigés parallèlement à une paroi arrière de moufle (34a-b).

7. Dispositif d'appareil de cuisson selon l'une des revendications 2 à 6, **caractérisé en ce que** le conducteur (20a-b) forme, dans une vue selon un plan transversal comprenant l'axe de rotation (14a-b), une forme en escalier.

8. Appareil de cuisson avec au moins un dispositif d'appareil de cuisson (10a-c) selon l'une des revendications précédentes.

9. Procédé d'exploitation d'un dispositif d'appareil de cuisson (10a-c), en particulier selon l'une des revendications 1 à 7, avec au moins une unité soufflante (12a-c), laquelle présente au moins une roue de ventilateur (16a-c) rotative autour d'un axe de rotation (14a-c), avec au moins une paroi arrière d'appareil de cuisson (36a-c), avec au moins un moufle (44a-c), et avec un élément chauffant (18a-c), disposé avec la roue de ventilateur (16a-c), en vue frontale, derrière la paroi arrière d'appareil de cuisson (36a-c) et entre la paroi arrière d'appareil (36a-c) et une paroi arrière de moufle (34a-c) du moufle (44a-c), dans lequel l'élément chauffant (18a-c) est disposé dans une zone proche de la roue de ventilateur (16a-c), dans lequel la roue de ventilateur (16a-c) est, dans au moins un état de fonctionnement, chauffée par induction et dans lequel, dans l'état de fonctionnement, la paroi arrière d'appareil de cuisson (36a-c) est chauffée en sus.
